**Europäisches Patentamt**

**European Patent Office**

**Office européen des brevets**

(19)

(11) Veröffentlichungsnummer : **0 123 833**
**B1**

(12)

# EUROPÄISCHE PATENTSCHRIFT

(45) Veröffentlichungstag der Patentschrift :
**20.01.88**

(21) Anmeldenummer : **84102496.1**

(22) Anmeldetag : **08.03.84**

(51) Int. Cl.⁴ : **F 16 B 37/12, F 16 B 25/00**

(54) **Selbstschneidender Gewindeeinsatz.**

(30) Priorität : **29.03.83 DE 3311378**

(43) Veröffentlichungstag der Anmeldung :
**07.11.84 Patentblatt 84/45**

(45) Bekanntmachung des Hinweises auf die Patenterteilung : **20.01.88 Patentblatt 88/03**

(84) Benannte Vertragsstaaten :
**AT BE CH FR GB IT LI NL SE**

(56) Entgegenhaltungen :
**DE-B- 1 081 724**
**DE-C- 682 423**
**DE-C- 853 544**
**FR-A- 601 122**
**FR-A- 1 137 765**
**US-A- 2 024 169**

(73) Patentinhaber : **Precision Fasteners Gesellschaft für**
**Verbindungstechnik mbH**
**Postfach 1663**
**D-8450 Amberg (DE)**

(72) Erfinder : **Stöveken, Bernhard**
**Rathausstrasse 31**
**D-8451 Haselmühl (DE)**

(74) Vertreter : **Charrier, Rolf, Dipl.-Ing.**
**Postfach 260 Rehlingenstrasse 8**
**D-8900 Augsburg 31 (DE)**

# Beschreibung

Die Erfindung betrifft einen selbstschneidenden Gewindeeinsatz mit einem Außengewinde, einer konischen Anfasung an seinem Einsatzende und mit etwa radial verlaufenden Einschnitten im Bereich der Anfasung, deren in Eindrehrichtung gesehenen hinteren Kanten mit dem dort geschnittenen Außengewinde Gewindeschneidkanten bilden.

Selbstschneidende Gewindeeinsätze, wie sie in der Druckschrift Nr. 20 vom August 1982 der Firma Kerb-Konus-Vertriebs-GmbH gezeigt sind, dienen zur Herstellung von hochbelastbaren Schraubverbindungen in Werkstoffen geringer Scherfestigkeit. Im Bereich der Anfasung ist beispielsweise eine radiale, axial verlaufende Einfräsung vorgesehen, durch welche zwei Einschnitte gebildet werden, die das Außengewinde im Bereich der Anfasung schneiden. Es ist auch bekannt, im Bereich der Anfasung radial verlaufende Bohrungen vorzusehen, die das Außengewinde schneiden und die Einschnitte darstellen. Die sich dabei bildenden Gewindeschneidkanten schneiden ein Innengewinde in eine zylindrische Aufnahmebohrung, wenn ein derartiger Gewindeeinsatz in eine derartige Aufnahmebohrung eingedreht wird. Üblicherweise weisen diese Gewindeeinsätze ein Innengewinde auf, in das eine Schraube eingeschraubt werden kann, nachdem der Gewindeeinsatz in die Aufnahmebohrung eingesetzt ist.

Es besteht die Forderung, daß beim Einschrauben des Gewindeeinsatzes in die zylindrische Aufnahmebohrung das dabei aufzuwendende Drehmoment möglichst gering sein soll. Weiterhin besteht die Forderung, daß nach erfolgtem Eindrehen das Ausdrehmoment des Gewindeeinsatzes möglichst groß sein soll.

Beim Eindrehen selbstschneidender Gewindeeinsätze ist es von größter Wichtigkeit, daß der Einsatz sich unter entsprechendem Axialdruck sofort schraubenförmig in die Aufnahmebohrung einschneidet. Ist dies nicht oder erst verspätet der Fall, dann reibt der sich drehende Einsatz die Bohrung aus, bis diese so groß ist, daß der Einsatz nur noch ungenügenden Halt in der Aufnahmebohrung findet. Die sich ergebende Verbindung ist nur ungenügend belastbar. Diese Nachteile treten insbesondere auf, wenn die Wandung der Aufnahmebohrung aus Kunststoff besteht.

Es ist bekannt, daß diese Gewindeeinsätze sich nur in relativ gut zerspanbaren Materialien, insbesondere in zerspanbare und im gewissen Maße elastische Materialien eindrehen lassen. Eine Anwendung bei Materialien, die zum Fressen neigen, ist erschwert oder unmöglich. Dies gilt beispielsweise bei harten Kunststoffen oder Metallen, bei denen die Aufnahmebohrung deshalb fast so groß gemacht werden muß wie der Außendurchmesser des Außengewindes des Gewindeeinsatzes. Dabei muß die Aufnahmebohrung eng toleriert werden. Da hierbei ein nur wenig tiefes Innengewinde in die Aufnahmebohrung eingeschnitten wird, ist die Ausdrehfestigkeit des Einsatzes relativ gering.

Untersuchungen haben gezeigt, daß das Eindrehmoment erheblich größer ist als es die eigentliche Zerspanarbeit erfordert.

Die vorgenannten Nachteile sind im wesentlichen darauf zurückzuführen, daß das zwischen Anfasung und Außengewinde sich bildende Profil von der Gewindeschneidkante ab bis zur vorderen Kante des nächsten Einschnitts zunehmend größer wird was bedeutet, daß die Freifläche, die sich an jede Schneidfläche einer Gewindeschneidkante anschließt, einen negativen Freiwinkel aufweist. Dieser negative Freiwinkel entsteht dadurch, daß das durch die Anfasung abgeflachte Gewindeprofil hinter jeder Gewindeschneidkante entsprechend dem Verlauf der Gewindesteigung in den größeren Durchmesserbereich der Anfasung verläuft. Dies führt zu schlechten Schneideigenschaften und einer hohen Flächenpressung zwischen dem Einsatz und der Wandung der Aufnahmebohrung im Bereich der Anfasung womit auch erklärt werden kann, daß bei hartwandigen Aufnahmebohrungen die Bohrungswandung und/oder der Gewindeeinsatz bricht.

Es besteht die Aufgabe, diesen negativen Freiwinkel weitgehend zu vermeiden.

Gelöst wird diese Aufgabe bei dem eingangs genannten Gewindeeinsatz durch die kennzeichnenden Merkmale des Anspruches 1. Vorteilhafte Ausgestaltungen sind den Unteransprüchen entnehmbar.

Die Erfindung wird nachfolgend anhand verschiedener Ausführungsbeispiele näher erläutert. Es zeigen :

Fig. 1 eine teilweise im Schnitt dargestellte Seitenansicht eines bekannten Gewindeeinsatzes ;

Fig. 2 eine Draufsicht auf das Einsatzende dieses Einsatzes ;

Fig. 3 die sich bei dem Gewindeeinsatz nach den Fig. 1 und 2 ergebenden Gewindeschneidkanten ;

Fig. 4 ein gestrecktes Gewindeprofil entsprechend Fig. 3 ;

Fig. 5 ein erstes Ausführungsbeispiel der Erfindung ;

Fig. 6 ein zweites Ausführungsbeispiel ;

Fig. 7 ein drittes Ausführungsbeispiel ;

Fig. 8 zwei Ausführungsvarianten eines vierten Ausführungsbeispiels und

Fig. 9 ein fünftes Ausführungsbeispiel der Erfindung.

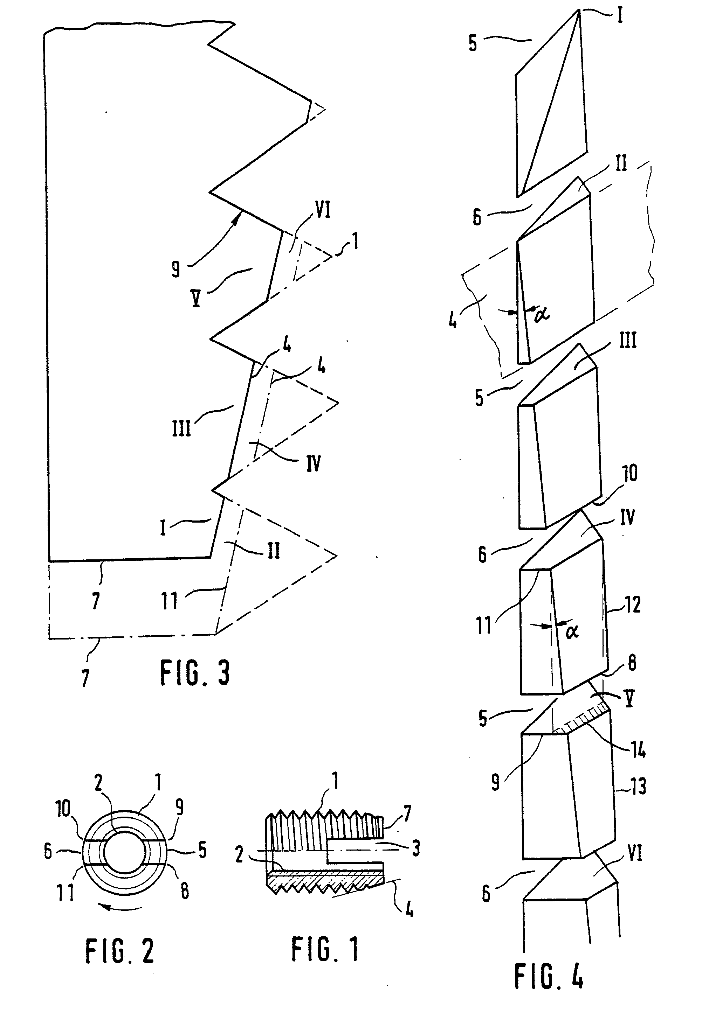

Um das Wesen der Erfindung zu erläutern, wird zuerst Aufbau und Arbeitsweise eines bekannten Gewindeeinsatzes anhand der Fig. 1 bis 4 erläutert.

Der ein Außengewinde 1 und ein Innengewinde 2 aufweisende Gewindeeinsatz ist an seinem Einsatzende mit einer Anfasung 4 versehen. Die Stirnseite des Einsatzendes trägt die Bezugsziffer 7. Am Einsatzende ist eine radial und axial verlaufende Einfräsung 3 vorgesehen, welche zwei Einschnitte 5, 6 bildet. Die Eindrehrichtung dieses Gewindeeinsatzes ist in Fig. 2 durch den Pfeil angedeutet. Der Einschnitt 5 bildet mit dem angefasten Teil in Drehrichtung gesehen vordere Kante 8 und hintere Kante 9. Der Einschnitt 6 bildet entsprechend eine vordere Kante 10 und eine hintere Kante 11. Die jeweils hinteren Kanten 9, 11 bilden die beiden Gewindeschneidkanten der beiden Einschnitte 5, 6.

In Fig. 3 ist die Gewindeschneidkante 9 des Einschnittes 5 ausgezogen dargestellt, während die Gewindeschneidkante 11 des Einschnittes 6 strichpunktiert dargestellt ist. Das im Bereich der Anfasung 4 sich ergebende theoretische Gewindeprofil des Außengewindes 1 ist gestrichelt gezeichnet.

An den Gewindeschneidkanten 9, 11 bilden sich aufeinanderfolgend Schneidflächenprofile I bis VI.

Wickelt man den durch die Anfassung 4 und die Einschnitte 5, 6 geschnittenen Gewindegang in einer Ebene ab, dann ergibt sich die Darstellung nach Fig. 4. Es zeigt sich, daß jedes Gewindegangteilstück einen negativen Freiwinkel $\alpha$ aufweist. Jedes Gewindeteilstück wirkt also wie ein Keil auf die Wandung der Aufnahmebohrung. Wie die Verhältnisse im Einzelnen liegen, ergibt ein Vergleich der Gewindeteilstücke mit den in Eindrehrichtung gesehenen aufeinanderfolgenden Schneidflächen IV und V. Das Gewindeteilstück 12 mit der Schneidfläche IV nimmt in seinem Profilquerschnitt von der Schneidfläche IV ab zu entsprechend dem negativen Freiwinkel $\alpha$. Es wird durch den Einschnitt 5 unterbrochen und das Gewinde setzt sich fort mit dem Gewindeteilstück 13 mit der Schneidfläche V. In die Schneidfläche V ist eingezeichnet der Verlauf der Schneidfläche IV wobei die gestrichelte Differenzfläche 14 im wesentlichen der Profilzunahme des Gewindeteilstücks 12 von seiner Schneidfläche IV ab entspricht. Über einen wesentlichen Teil seiner Länge drückt sich also das Gewindeteilstück 12 in das Material der Aufnahmebohrung ein, wobei das eingedrückte Material entsprechend seiner Elastizität zum Teil anschließend vom Flächenbereich 14 der Schneidfläche V als Span ausgeschnitten wird.

Die Wirkung des negativen Freiwinkels wird im wesentlichen durch die nachfolgend beschriebenen Ausführungsformen vermieden.

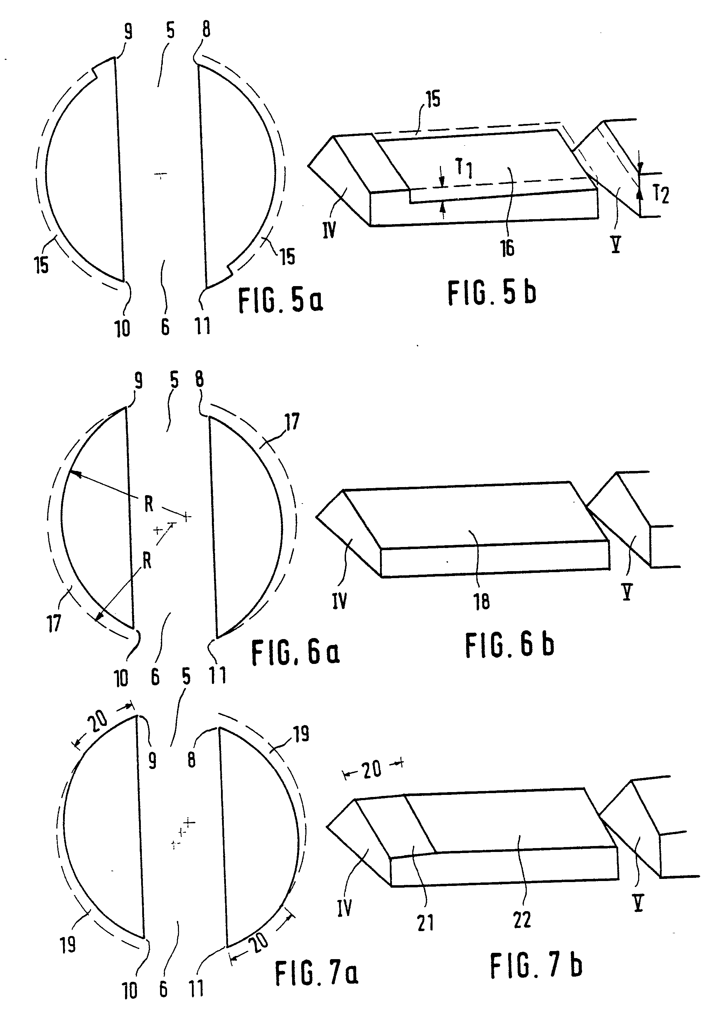

Die Fig. 5a, 6a und 7a stellen jeweils Schnitte quer zur Achse des Gewindeeinsatzes im Bereich der Anfasung bei drei Ausführungsbeispielen dar. Die Fig. 5b, 6b und 7b verdeutlichen jeweils ein Gewindeteilstück und den Anfang des in Drehrichtung folgenden Gewindeteilstücks, die sich dabei ergeben, entsprechend den Gewindeteilstücken 12 und 13 in Fig. 4.

Bei der Ausführungsform nach den Fig. 5a und 5b ist hinter jeder Gewindeschneidkante 11 eine Abstufung 15 vorgesehen, welche bis zur vorderen Kante 8, 10 des jeweils nächstfolgenden Einschnitts 5, 6 verläuft. Die Tiefe T1 entspricht etwa der Höhe der Schneidflächenvergrößerung T2 aufeinanderfolgender Schneidflächenprofile, wie beispielsweise der Schneidflächenprofile IV und V. In kurzem Abstand hinter jeder Schneidfläche I bis VI ist also eine Freifläche 16 vorhanden, die einen positiven Freiwinkel bildet.

Bei dem Ausführungsbeispiel nach den Fig. 6a und 6b ist unmittelbar hinter jeder Gewindeschneidkante 9, 11 eine kreisbogenförmige Abflachung 17 vorgesehen. Die Radien R am Grund der Abflachungen 17 entsprechen dem Radius R des Querschnitts ohne die Abflachungen. Damit ergeben sich Gewindeteilstücke, deren Querschnittsprofil von den jeweiligen Schneidflächen ab konstant bleibt, deren Profil sich jedoch aufeinanderfolgend stufenförmig vergrößert. Hierbei ergibt sich ein Freiwinkel der Freifläche 18 von 0°.

Bei dem Ausführungsbeispiel nach den Fig. 7a und 7b beginnt die kreisbogenförmige Abflachung 19 jeweils im Abstand 20 hinter jeder Gewindeschneidkante 9, 11. Sind die Verhältnisse der Radien der gleichen wie in Fig. 6, dann ergibt sich ein kurzes Freiflächenteilstück 21 mit einem negativen Freiwinkel $\alpha$ und ein langes Freiflächenteilstück 22 mit einem Freiwinkel von 0°. Werden die Radien der kreisbogenförmigen Abflachungen 17, 19 kleiner als zuvor erwähnt gewählt, dann ergeben sich positive Freiwinkel für die Freiflächen 18, 22.

Bevorzugt weisen die kreisbogenförmigen Abflachungen 17, 19 an den vorderen Kanten 8, 10 eine Tiefe auf, die etwa der Höhe T2 der Schneidflächenvergrößerung entspricht.

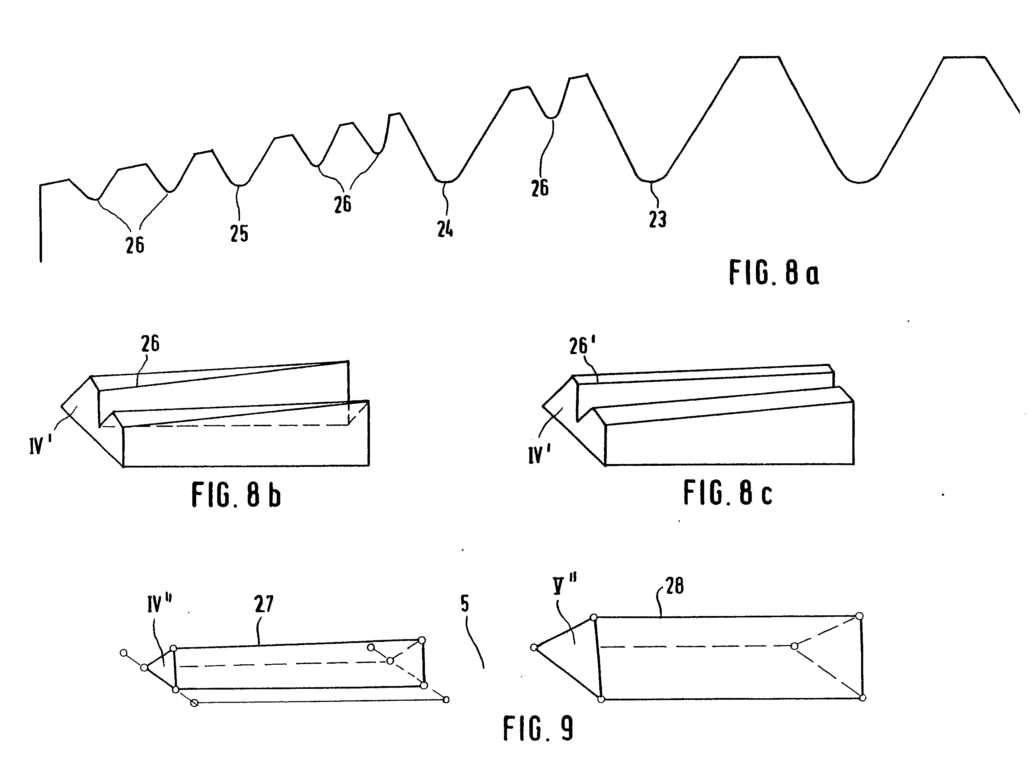

Bei der Ausführungsform nach den Fig. 8a, 8b und 8c sind zwischen benachbarten Gewindegründen 23, 24, 25 des Außengewindes keilförmige Riefen 26 vorgesehen. Zwischen den Gewindegründen 23 und 24 ist eine Riefe 26 und zwischen den Gewindegründen 24 und 25 sind zwei Riefen 26 vorgesehen. Gemäß Fig. 8b nimmt die Tiefe der Riefe 26 von der Schneidfläche IV' ab zu während gem. Fig. 8c die Tiefe der Riefe 26' in dazu geringerem Maße zunimmt. Die Ausführungsform gem. Fig. 8b ist zum Einsatz in harten Materialien und die Ausführungsform gem. Fig. 8c zum Einsatz in weichere Materialien geeignet.

Gemäß Fig. 9 weisen die aufeinanderfolgenden Gewindeteilstücke 27, 28 ein jeweils konstantes Dreiecksprofil auf, wobei die aufeinanderfolgenden Profile IV'', V'' der Gewindeteilstücke 27, 28 stufenförmig zunehmen. Auch hierbei ergibt sich ein Freiwinkel von 0°. Vergleichbar ist diese Ausführungsform mit der Ausführungsform gem. Fig. 6. Auch hier ist es möglich, einen positiven Freiwinkel zu erhalten, wenn der Profilquerschnitt von den Schneidflächen IV'' und V'' nach hinten zu abnimmt. Erreicht wird dies durch eine Querschnittsform entsprechend Fig. 6a.

Durch den konstanten Querschnitt der Gewindeteilstücke sind diese also gegenüber ihrem natürlichen Verlauf, wo der Querschnitt wie in Fig. 4 dargestellt zunimmt, abgeflacht.

Bei der Ausführungsform nach Fig. 8 besteht die Abflachung in einer Unterbrechung oder Zerstörung der jeweiligen Freifläche.

Bei den bekannten selbstschneidenden Gewindeeinsätzen, bei denen die radialen Einschnitte durch eine radiale, axial verlaufende Einfräsung gebildet werden, und die ein Innengewinde aufweisen, werden die Wandungen zwischen den Schlitzen infolge des negativen Freiwinkels nach innen gepresst, wenn der Gewindeeinsatz in eine glatte Aufnahmebohrung eingedreht wird. Hierdurch wird das Innengewinde des Gewindeeinsatzes im Bereich der radialen Einschnitte nach innen gedrückt, d. h. sein Durchmesser vermindert. Dies ist unerwünscht, da bei einem Einschrauben einer Schraube in das Innengewinde des Gewindeeinsatzes deren Einsatzende im Bereich des verminderten Innendurchmessers festsitzt.

Dieser Nachteil tritt bei den erfindungsgemäßen Gewindeeinsätzen nicht auf, da die Wandungen zwischen den Schlitzen nicht zusammengepresst werden, wenn der Gewindeeinsatz in die Aufnahmebohrung eingeschraubt wird. Das Innengewinde des Gewindeeinsatzes ist also nach dessen Montage auf seine ganze Länge hinweg maß- und lehrenhaltig.

**Patentansprüche**

1. Selbstschneidender Gewindeeinsatz mit einem Außengewinde (1), dessen Gewindegrund einen konstanten Abstand zur Achse des Gewindeeinsatzes aufweist, mit einem konischen Verlauf an seinem Einsatzende und mit etwa radial verlaufenden Einschnitten (3) im Bereich des konischen Teils des Gewindeeinsatzes, deren in Eindrehrichtung gesehen hintere Kanten mit dem dort geschnittenen Außengewinde (1) Gewindeschneidkanten (9, 11) bilden, deren Schneidflächenprofile (I-VI) ausgehend vom Einsatzende von Gewindeteilstück zu Gewindeteilstück, die jeweils durch die Einschnitte (3) begrenzt sind, sich stufenweise radial vergrößern, dadurch gekennzeichnet, daß das Profil der Gewindeteilstücke hinter jeder Gewindeschneidkante (9, 11) im wesentlichen dem Schneidflächenprofil (I-VI) dieser Gewindeschneidkante entspricht.

2. Gewindeeinsatz nach Anspruch 1, dadurch gekennzeichnet, daß der radiale Abstand zwischen der Freifläche (16, 18, 21, 22) eines Gewindeteilstücks an der vorderen Kante (8, 10) des Einschnitts (5, 6) und der Freifläche (16, 18, 21, 22) nachfolgenden Gewindeteilstücks an der hinteren Kante (9, 11) dieses Einschnitts etwa der Höhe (T2) der Schneidflächenvergrößerung der Schneidflächenprofile dieser aufeinanderfolgenden Gewindeteilstücke entspricht.

3. Gewindeeinsatz nach Anspruch 2, dadurch gekennzeichnet, daß hinter den Gewindeschneidkanten eine Abstufung (15) vorgesehen ist, die bis zur vorderen Kante (8, 10) des nächstfolgenden Einschnitts (5, 6) verläuft.

4. Gewindeeinsatz nach Anspruch 3, dadurch gekennzeichnet, daß die Abstufung (15) im Querschnitt kreisförmig verläuft und eine Tiefe (T1) aufweist, die etwa der Höhe (T2) der Schneidflächenvergrößerung aufeinanderfolgender Schneidflächenprofile entspricht.

5. Gewindeeinsatz nach Anspruch 2, dadurch gekennzeichnet, daß hinter den Gewindeschneidkanten die konische Anfasung im Querschnitt gesehen eine kreisbogenförmige Abflachung (17, 19) aufweist, die zur vorderen Kante (8, 10) des nächstfolgenden Einschnitts (5, 6) verläuft.

6. Gewindeeinsatz nach Anspruch 5, dadurch gekennzeichnet, daß die kreisbogenförmige Abflachung (19) im Abstand (20) hinter der Gewindeschneidkante beginnt.

7. Gewindeeinsatz nach Anspruch 5, dadurch gekennzeichnet, daß die kreisbogenförmige Abflachung (17) unmittelbar an der Gewindeschneidkante beginnt.

8. Gewindeeinsatz nach einem der Ansprüche 5 bis 7, dadurch gekennzeichnet, daß die kreisbogenförmige Abflachung (17, 19) an der vorderen Kante (8, 10) eine Tiefe aufweist, die etwa der Höhe (T2) der Schneidflächenvergrößerung aufeinanderfolgender Schneidflächenprofile entspricht.

9. Gewindeeinsatz nach Anspruch 1, dadurch gekennzeichnet, daß das Profil dreiecksförmig ist und mit wachsendem Durchmesser des konischen Teils zunimmt.

10. Gewindeeinsatz nach einem der Ansprüche 1 bis 9, dadurch gekennzeichnet, daß zwischen benachbarten Gewindegründen (23, 24, 25) parallel zu diesen Riefen (26, 26') verlaufen.

11. Gewindeeinsatz nach Anspruch 10, dadurch gekennzeichnet, daß die Riefe (26) eine zur vorderen Kante des nächstfolgenden Einschnitts zunehmende Tiefe aufweist.

**Claims**

1. Self-tapping screw insert having an external thread (1), the thread base of which is a constant distance from the axis of the screw insert, having a conical path at the insert end and having notches (3), running roughly radially, in the region of the conical part of the screw insert, the rear edges of which, when viewed in the tapping direction, together with the outer thread (1) cut there form thread tapping edges (9, 11), the tapping surface profiles (I-VI) of which gradually increase radially from the insert end from one threaded part piece to the next, which are respectively limited by the notches (3), characterised in that the profile of the threaded part pieces behind each thread tapping edge (9, 11) substantially corresponds to the tapping edge profile (I-VI) of this thread tapping edge.

2. Screw insert according to Claim 1, characterised in that the radial distance between the free area (16, 18, 21, 22) of a threaded part piece at the front edge (8, 10) of the notch (5, 6) and the free area (16, 18, 21, 22) of the subsequent threaded part piece at the back edge (9, 11) of this notch corresponds approximately to the height (T2) of the enlargement of the tapping surfaces of the tapping surface profiles of these successive threaded part pieces.

3. Screw insert according to Claim 3, characterised in that behind the thread tapping edges there is provided a gradation (15), which goes right up to the front edge (8, 10) of the subsequent notch (5, 6).

4. Screw insert according to Claim 3, characterised in that the cross section of the gradation (15) is circular and the gradation (15) has a depth approximately corresponding to the height (T2) of the enlargement of the tapping surfaces of successive tapping surface profiles.

5. Screw insert according to Claim 2, characterised in that behind the thread tapping edges the conical chamfer has a circular truncation (17, 19) when viewed in cross section, which goes right up to the front edge (8, 10) of the next notch (5, 6).

6. Screw insert according to Claim 5, characterised in that the circular truncation (19) begins at a distance (20) behind the thread tapping edge.

7. Screw insert according to Claim 5, characterised in that the circular truncation (15) begins directly at the thread tapping edge.

8. Screw insert according to one of Claims 5 to 7, characterised in that the circular truncation (17, 19) at the front edge (8, 10) has a depth corresponding approximately to the height (T2) of the tapping surface enlargement of successive tapping surface profiles.

9. Screw insert according to Claim 1, characterised in that the profile is triangular and increases with an increase in diameter of the conical part.

10. Screw insert according to one of Claims 1 to 9, characterised in that between adjacent thread bases (23, 24, 25) grooves (26, 26') pass parallel thereto.

11. Screw insert according to Claim 10, characterised in that the groove (26) has a depth increasing towards the front edge of the next notch.

**Revendications**

1. Douille autotaraudeuse comportant un filetage extérieur (1), dont le fond de filet présente un espacement constant par rapport à l'axe de la douille taraudeuse, un profil conique à son extrémité de coupe et des encoches (3) orientées à peu près radialement, placées dans une zone de la partie conique de la douille taraudeuse et dont des arêtes arrière, en considérant le sens de vissage, forment avec le filetage extérieur (1) usiné dans cette zone, des arêtes de coupe de filetage (9, 11) dont les profils de surfaces de coupe (I-VI) augmentent radialement de façon échelonnée depuis l'extrémité de coupe d'une partie de filetage jusqu'à des parties de filetage qui sont respectivement délimitées par les encoches (3), caractérisée en ce que le profil des parties de filetage en arrière de chaque arête de coupe de filetage (9, 11) correspond dans l'essentiel au profil de surface de coupe (I-VI) de cette arête de coupe de filetage.

2. Douille autotaraudeuse selon la revendication 1, caractérisée en ce que la distance radiale entre la surface de dépouille (16, 18, 21, 22) d'une partie de filetage sur l'arête avant (8, 10) de l'encoche (5, 6) et la surface de dépouille (16, 18, 21, 22) d'une partie de filetage suivante sur l'arête arrière (9, 11) de cette encoche correspond à peu près à la hauteur (T2) de la zone d'augmentation de surface de coupe des profils de surfaces de coupe de ces parties de filetage qui se suivent.

3. Douille autotaraudeuse selon la revendication 2, caractérisée en ce qu'il est prévu en arrière des arêtes de coupe de filetage une partie en gradin (15), qui s'étend jusqu'au bord avant (8, 10) de l'encoche immédiatement suivante (5, 6).

4. Douille autotaraudeuse selon la revendication 3, caractérisée en ce que la partie en gradin (15) a en section droite une forme circulaire et a une profondeur (T1) qui correspond à peu près à la hauteur (T2) de la zone d'augmentation de surface de coupe de profils de surfaces de coupe se suivant.

5. Douille autotaraudeuse selon la revendication 2, caractérisée en ce que, en arrière des arêtes de coupe de filetage, le chanfrein conique comporte, en considérant sa section droite, un méplat en forme d'arc de cercle (17, 19), qui s'étend jusqu'au bord avant (8, 10) de l'encoche immédiatement suivante (5, 6).

6. Douille autotaraudeuse selon la revendication 5, caractérisée en ce que le méplat en forme d'arc de cercle (19) commence à une certaine distance (20) en arrière de l'arête de coupe de filetage.

7. Douille autotaraudeuse selon la revendication 5, caractérisée en ce que le méplat en forme d'arc de cercle (19) commence directement sur l'arête de coupe de filetage.

8. Douille autotaraudeuse selon une des revendications 5 à 7, caractérisée en ce que le méplat en forme d'arc de cercle (17, 19) a, sur le bord avant (8, 10), une profondeur qui correspond à peu près à la hauteur (T2) de la zone d'augmentation de surface de coupe de profils de surfaces de coupe se suivant.

9. Douille autotaraudeuse selon la revendication 1, caractérisée en ce que le profil a une forme triangulaire et augmente à mesure que croît le diamètre de la partie conique.

10. Douille autotaraudeuse selon une des revendications 1 à 9, caractérisée en ce qu'il est prévu entre des fonds de filets adjacents (23, 24, 25) des cannelures (26, 26') orientées parallèlement à ceux-ci.

11. Douille autotaraudeuse selon la revendication 10, caractérisée en ce que la cannelure (26) a une profondeur augmentant en direction du bord avant de l'encoche immédiatement suivante.

FIG. 3

FIG. 2

FIG. 1

FIG. 4

FIG. 5a

FIG. 5b

FIG. 6a

FIG. 6b

FIG. 7a

FIG. 7b

FIG. 8 a

FIG. 8 b

FIG. 8 c

FIG. 9

0 123 833